# EUROPEAN PATENT APPLICATION

(11) **EP 4 786 069 A1**
(43) Date of publication of application: **05.08.2026**
(21) Application number: 24891517.5
(22) Date of filing: 15.11.2024
(51) Int. Cl.: B21D 28/02, H02K 15/027, H02K 15/0273

(54) **LAMINATED IRON CORE MANUFACTURING APPARATUS AND MANUFACTURING METHOD**

(30) Priority: 16.11.2023 JP 2023195387
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); KATAOKA, Takashi, Tokyo 100-8071 (JP)
(74) Representative: Vossius & Partner Patentanwälte Rechtsanwälte mbB
(86) International application number: PCT/JP2024/040684
(87) International publication number: WO 2025/105482

(57) **Abstract**

Provided are a manufacturing device and a manufacturing method for a laminated core that can more reliably separate the laminated core from the group of core sheets and increase the punching speed of the core sheets. A manufacturing device 1 for a laminated core 4 according to the present invention is a manufacturing device 1 for a laminated core 4 in which core sheets 3 having a predetermined shape are formed by punching from a steel sheet 2 and a predetermined number of core sheets 3 are laminated and bonded, the manufacturing device 1 including: a punching portion 5 that punches out the core sheets 3 from the steel sheet 2; an adhesive application portion 6 that applies an adhesive to portions of the steel sheet 2 corresponding to the core sheets 3; a laminating portion 7 that laminates and bonds the core sheets 3 to which the adhesive has been applied to form a group of core sheets 30; and a separation portion 8 that bites into spaces between core sheets 3 adjacent to one another within the group of core sheets 30 to separate the laminated core 4 from the group of core sheets 30, wherein the laminating portion 7 includes a plurality of pairs of side pressure application portions 71 that apply a side pressure to the group of core sheets 30, each pair of side pressure application portions 71 is disposed to face each other with the group of core sheets 30 sandwiched therebetween, and at least one of the side pressure application portions 71 is configured to serve as the separation portion 8.

## Description

### [Technical Field]

The present invention relates to a manufacturing device for a laminated core and a manufacturing method for the same, in which core sheets having a predetermined shape are punched out from a steel sheet and a laminated core is manufactured by laminating and bonding a predetermined number of the core sheets.

### [Background Art]

Laminated cores in which a predetermined number of core sheets are laminated are used as cores in rotating electrical machines. The core sheets are joined together by various methods. When caulking or welding is used as the joining method, the magnetic characteristics of the laminated core may be deteriorated due to mechanical or thermal stress during joining, as well as interlayer short circuits, resulting in the laminated core failing to achieve its full performance. For this reason, as shown in Patent Literature 1 below and the like, laminating and bonding of core sheets has been explored.

Patent Literature 1 describes a manufacturing device for a laminated core including: an upper die and a lower die; a progressive die means for sequentially punching core sheets from a strip-shaped thin steel sheet fed intermittently; and an adhesive application means provided within the lower die for applying an adhesive to portions of the strip-shaped thin steel sheet corresponding to the core sheets. The adhesive application means includes an adhesive discharge portion including a nozzle block with a plurality of discharge holes opened on its upper surface, and an adhesive feed portion that discharges the adhesive from the plurality of discharge holes by feeding the adhesive to the adhesive discharge portion at a predetermined pressure. The adhesive application means further includes a reciprocating drive portion that moves the adhesive discharge portion forward and backward relative to the adhesive application surface of the strip-shaped thin steel sheet. By moving the adhesive discharge portion forward and backward via the reciprocating drive portion, the execution of the adhesive application process by the adhesive discharge portion is switched on or off. At the position of the core sheet to which no adhesive has been applied, a laminated core consisting of a predetermined number of core sheets is separated from the group of core sheets.

### [Citation List]

### [Patent Literature]

[Patent Literature 1] Japanese Patent Application Publication No. 2017-216873 A

### [Summary of Invention]

### [Technical Problem]

In response to the growing demand for rotating electrical machines, there is a need to increase the punching speed of core sheets. In the conventional device described in Patent Literature 1 above, the execution of the adhesive application process is switched on or off by the forward and backward movement of the adhesive discharge portion; however, as the punching speed increases, switching of the adhesive application process becomes difficult, making it difficult to separate the laminated core from the group of core sheets.

The present invention has been made to solve the above problems, and one of objectives of the present invention is to provide a manufacturing device and a manufacturing method for a laminated core that can more reliably separate the laminated core from the group of core sheets and increase the punching speed of the core sheets.

### [Solution to Problem]

In one embodiment, the manufacturing device for a laminated core according to the present invention is a manufacturing device for a laminated core in which core sheets having a predetermined shape are formed by punching from a steel sheet and a predetermined number of core sheets are laminated and bonded, the manufacturing device comprises: a punching portion that punches out core sheets from a steel sheet; an adhesive application portion that applies an adhesive to portions of the steel sheet corresponding to the core sheets; a laminating portion that laminates and bonds the core sheets to which an adhesive has been applied to form a group of core sheets; and a separation portion that bites into spaces between core sheets adjacent to each other within the group of core sheets to separate the laminated core from the group of core sheets, wherein the laminating portion comprises a plurality of pairs of side pressure application portions that apply a side pressure to the group of core sheets, each pair of side pressure application portions is disposed to face each other with the group of core sheets sandwiched therebetween, and at least one of the side pressure application portions is configured to serve as the separation portion.

Also, in one embodiment, the manufacturing method for a laminated core according to the present invention includes manufacturing a laminated core using the above manufacturing device for a laminated core.

### [Advantageous Effects of Invention]

According to one embodiment of the manufacturing device and manufacturing method for a laminated core of the present invention, the separation portion bites into spaces between core sheets adjacent to each other within the group of core sheets and separates the laminated core having a predetermined number of core sheets laminated and bonded, from the group of core sheets, so that the separation of the laminated core from the group of core sheets can be performed more reliably, and the punching speed of the core sheets can be increased.

### [Brief Description of Drawings]

[Fig. 1] Fig. 1 is an explanatory view showing a manufacturing device for a laminated core according to Embodiment 1 of the present invention.
[Fig. 2] Fig. 2 is an explanatory view showing the laminating portion of Fig. 1 in more detail.
[Fig. 3] Fig. 3 is a plan view showing the group of core sheets and the side pressure application portion of Fig. 2.
[Fig. 4] Fig. 4 is an explanatory view showing the operation of the side pressure application portion of Fig. 2.
[Fig. 5] Fig. 5 is an explanatory view showing a first variation of the side pressure application portion of Fig. 4.
[Fig. 6] Fig. 6 is an explanatory view showing a second variation of the side pressure application portion of Fig. 4.
[Fig. 7] Fig. 7 is an explanatory view showing a third variation of the side pressure application portion of Fig. 4.
[Fig. 8] Fig. 8 is a cross-sectional view of the core sheet of Fig. 2.
[Fig. 9] Fig. 9 is an enlarged view showing an adhesive application portion 6 of Fig. 1.
[Fig. 10] Fig. 10 is an explanatory view showing a laminating portion of a manufacturing device for a laminated core according to Embodiment 2 of the present invention.

### [Description of Embodiments]

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

### Embodiment 1.

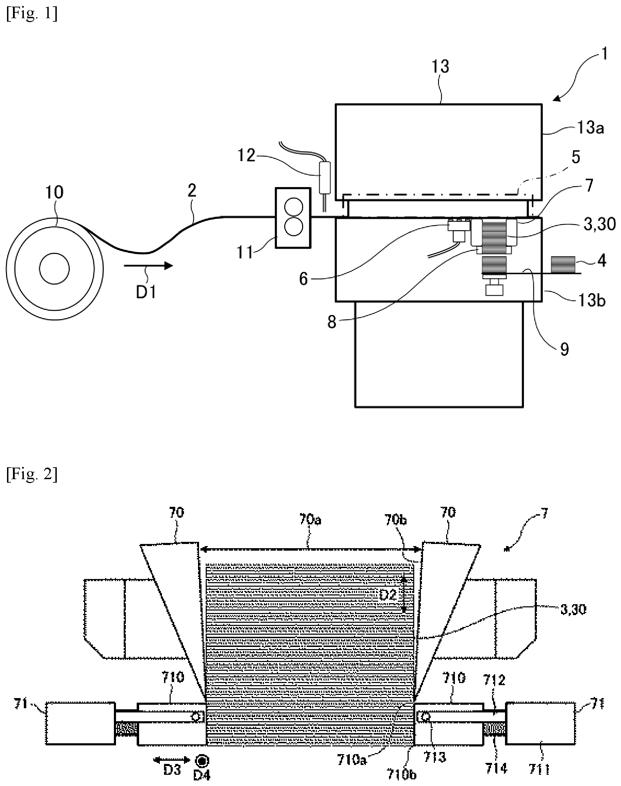

Fig. 1 is an explanatory view showing a manufacturing device 1 for a laminated core 4 according to Embodiment 1 of the present invention. The manufacturing device 1 is a manufacturing device for a laminated core 4 in which core sheets 3 having a predetermined shape are formed by punching from a steel sheet 2 and a predetermined number of the core sheets 3 is laminated and bonded.

As shown in Fig. 1, the manufacturing device 1 according to this embodiment may include a reel 10, a feeder 11, an oil applicator 12, and press equipment 13. The reel 10 is provided with a coil of the steel sheet 2. The steel sheet 2 drawn from the reel 10 is fed through the feeder 11 to the press equipment 13. The oil applicator 12 is disposed between the feeder 11 and the press equipment 13, and feeds a pressing oil to the surface of the steel sheet 2 before it is introduced into the press equipment 13. The press equipment 13 includes an upper die 13a and a lower die 13b, and the core sheet 3 is punched out from the steel sheet 2 by the upper die 13a and the lower die 13b.

The manufacturing device 1 according to this embodiment includes a punching portion 5, an adhesive application portion 6, a laminating portion 7, and a separation portion 8.

The punching portion 5 is a portion for punching the core sheet 3 from the steel sheet 2. The punching portion 5 may be formed by the upper die 13a and the lower die 13b.

The punching of the steel sheet 2 by the punching portion 5 may be performed in multiple stages. That is, the steel sheet 2 may be sequentially punched in a feed direction D1 of the steel sheet 2 toward the final core sheet 3. The punching of the steel sheet 2 by the punching portion 5 may include a pre-processing step, performed in one or more stages, to punch out portions of the steel sheet 2 other than the outer shape or outer periphery of the core sheet 3, and an outer shape punching step, performed after the pre-processing, to punch out the outer shape of the core sheet 3 from the steel sheet 2. The outer shape punching is performed last, and the core sheet 3 is punched out from the steel sheet 2 when the outer shape of the core sheet 3 is punched out.

The adhesive application portion 6 is a portion for applying an adhesive to portions of the steel sheet 2 corresponding to the core sheet 3. The adhesive application portion 6 may be incorporated into the lower die 13b and may apply the adhesive to the lower surface of the steel sheet 2. The application of the adhesive may be performed before the core sheet 3 is finally punched out from the steel sheet 2, i.e., during pre-processing or prior to the outer shape punching. However, the timing of the adhesive application is arbitrary, and the adhesive may be applied at other times, such as before the steel sheet 2 is introduced into the press equipment 13.

The laminating portion 7 is a portion for laminating and bonding the core sheets 3 to which the adhesive has been applied to form the group of core sheets 30. The laminating portion 7 may be incorporated into the lower die 13b at the position where the outer shape punching is performed by the punching portion 5. The group of core sheets 30 consists of a plurality of core sheets 3 laminated and bonded together. The core sheet 3 is dropped onto the group of core sheets 30 formed by previously punched core sheets 3, and is closely pressed against and bonded to the upper surface of the group of core sheets 30 by the weight of the core sheet 3 itself or subsequent core sheets 3, and by the pressure applied by the upper die 13a. The upper die 13a may be provided with a protrusion that presses the core sheet 3 on the top of the group of core sheets 30 downward by an amount equal to the thickness of a single core sheet 3 to apply pressure.

The separation portion 8 is a portion that bites into spaces between the core sheets 3 adjacent to each other within the group of core sheets 30 to separate the laminated core 4 from the group of core sheets 30. The separation portion 8 may be incorporated into the lower die 13b so as to be positioned at or below the lower portion of the laminating portion 7. For example, the separation of the laminated core 4 by the separation portion 8 is performed once for every time a plurality of core sheets 3, such as 200 sheets, are punched out. That is, the frequency at which the separation of the laminated core 4 is performed is lower than the frequency at which the core sheets 3 are punched out.

In the prior art, the adhesive was not applied to one of a predetermined number of core sheets 3, and the group of core sheets 30 was configured to be separated at the core sheet 3 to which the adhesive was not applied. However, when punching the core sheets 3 at high speeds, such as 100 spm or more, it becomes difficult to switch the application of the adhesive, making it difficult to separate the laminated core 4 from the group of core sheets 30. For this reason, in the prior art, there were limitations on the punching speed of the core sheets 3. In the manufacturing device 1 according to this embodiment, the separation portion 8 bites into spaces between the core sheets 3 adjacent to each other within the group of core sheets 30, thereby separating the laminated core 4, in which a predetermined number of core sheets 3 have been laminated and bonded, from the group of core sheets 30. This allows for more reliable separation of the laminated core 4 from the group of core sheets 30, enabling an increase in the punching speed of the core sheets 3. In the manufacturing device 1 according to this embodiment, the adhesive application portion 6 does not need to performing switching as to whether or not the adhesive is applied, and the adhesive may be applied to the portions corresponding to all core sheets 3.

The manufacturing device 1 may include a conveyor 9 for conveying the laminated core 4 separated from the group of core sheets 30 by the separation portion 8. The laminated core 4 may be removed from the lower die 13b by the conveyor 9.

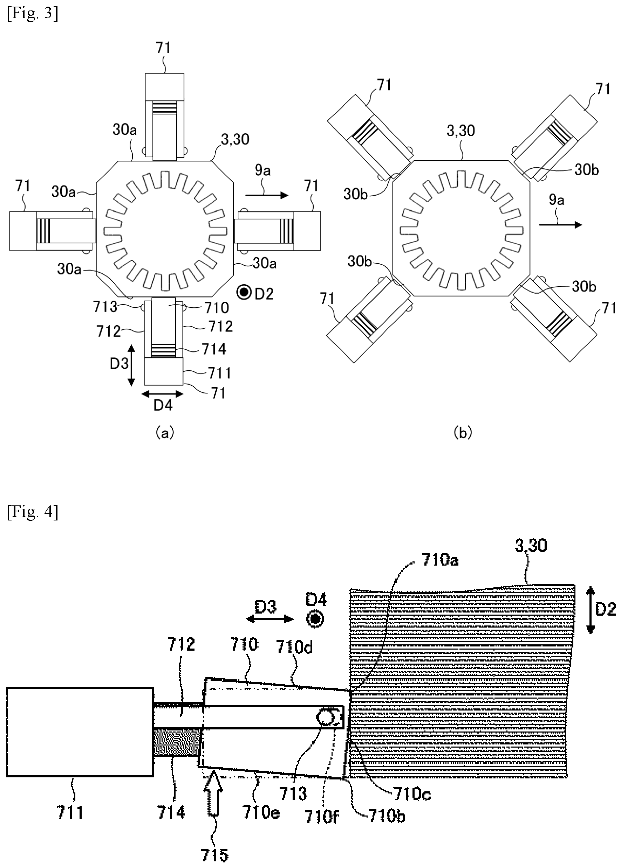

Next, Fig. 2 is an explanatory view more specifically showing the laminating portion 7 of Fig. 1, Fig. 3 is a plan view showing the group of core sheets 30 and the side pressure application portion 71 of Fig. 2, and Fig. 4 is an explanatory view showing the operation of the side pressure application portion 71 of Fig. 2.

As shown in Figs. 2 and 3, the laminating portion 7 may include a squeeze portion 70 and a plurality of pairs of side pressure application portions 71. Fig. 3 (a) and (b) each illustrates a configuration in which the laminating portion 7 has two pairs of side pressure application portions 71.

The squeeze portion 70 is configured to form an internal space 70a that narrows from top to bottom. The squeeze portion 70 may be positioned at the upper portion of the laminating portion 7. By the inner surface 70b of the squeeze portion 70, the core sheet 3 is guided and a side pressure is applied to the core sheet 3, whereby the position of the core sheet 3 to be laminated in the group of core sheets 30 is adjusted as it moves downward.

The plurality of pairs of side pressure application portions 71 are configured to apply a side pressure to the group of core sheets 30. The plurality of pairs of side pressure application portions 71 may be disposed at the lower portion of the laminating portion 7. The plurality of pairs of side pressure application portions 71 may be provided separately from the squeeze portion 70, below the squeeze portion 70. By applying the side pressure to the group of core sheets 30 via the plurality of pairs of side pressure application portions 71, the group of core sheets 30 can be held in place. From this perspective, the side pressure application portions 71 may also be referred to as holding portions or brakes. As shown in Fig. 3 (a) and (b), each pair of side pressure application portions 71 may be disposed to face each other with the group of core sheets 30 sandwiched therebetween. Each pair of side pressure application portions 71 may be disposed at a distance from each other in the circumferential direction of the group of core sheets 30 so as to be pressed against any side surface of the group of core sheets 30.

As shown in Fig. 3 (a) and (b), when viewed in plan, the group of core sheets 30 may have four first side surfaces 30a (side surfaces extending in the upper, lower, left, and right directions in the figure) and four second side surfaces 30b located at the four corners. Two first side surfaces 30a adjacent to each other in the circumferential direction of the group of core sheets 30 extend in directions orthogonal to each other. Each of the second side surfaces 30b extends with inclination to the directions in which the two first side surfaces 30a extend and connects those two first side surfaces 30a. Fig. 3 (a) illustrates a configuration in which the side pressure application portions 71 are pressed against the four first side surfaces 30a extending in the upper, lower, left, and right directions in the figure. The side pressure application portions 71 may be pressed against the central portions of the upper, lower, left, and right first side surfaces 30a. Fig. 3 (b) illustrates a configuration in which the side pressure application portions 71 are pressed against the four second side surfaces 30b located at the four corners. When viewed in plan as shown in Fig. 3, the extending widths of the second side surfaces 30b at the four corners are shorter than those of the upper, lower, left, and right first side surfaces 30a, and the side pressure application portions 71 may be pressed against a large portion (50% or more) of the region of the second side surfaces 30b at the four corners. Arrows 9a in Fig. 3 (a) and (b) indicate the conveying direction of the laminated core 4 by the conveyor 9.

In the manufacturing device 1 according to this embodiment, at least one of the side pressure application portions 71 also serves as the separation portion 8. Since at least one of the side pressure application portions 71 also serves as the separation portion 8, the number of parts in the manufacturing device 1 can be reduced.

In this embodiment, four side pressure application portions 71 are arranged at 90-degree intervals in the circumferential direction of the group of core sheets 30. All four side pressure application portions 71 may serve as the separation portions 8, or only three or fewer side pressure application portions 71 may serve as the separation portions 8. Furthermore, at least one pair of the plurality of pairs of side pressure application portions 71 may serve as the separation portions 8. In this case, the separation portions 8 (side pressure application portions 71) may bite into spaces between the core sheets 3 from both sides of the group of core sheets 30. Alternatively, one of the side pressure application portions 71 in each pair may serve as the separation portion 8. In this case, the separation portion 8 (side pressure application portion 71) may bite into spaces between the core sheets 3 from two directions orthogonal to each other.

Each of the plurality of pairs of side pressure application portions 71 may include a brake block 710 that is pressed against the side surface of the group of core sheets 30. The brake block 710 may be configured to be tilted when separating the laminated core 4 from the group of core sheets 30, such that the upper or lower corner 710a, 710b in a height direction D2 of the group of core sheets 30 bites into spaces between the core sheets 3. As specifically shown in Fig. 4, the brake block 710 according to this embodiment is configured such that the upper corner 710a bites into spaces between the core sheets 3, while the lower corner 710b is tilted away from the group of core sheets 30.

Although the brake block 710 having any shape may be used, the shape of the brake block 710 according to this embodiment is generally rectangular. The brake block 710 may have a front face 710c, an upper face 710d, and a lower face 710e. The front face 710c is the face pressed against the side surface of the group of core sheets 30 and may be a plane parallel to the side surface of the group of core sheets 30. The upper face 710d is the face extending in a front-to-back direction D3 of the brake block 710 from the upper end of the front face 710c, and the lower face 710e is the face extending in the front-to-back direction D3 of the brake block 710 from the lower end of the front face 710c. The upper face 710d and the lower face 710e may be planes perpendicular to the front face 710c. The upper face 710d and the lower face 710e may extend parallel to each other and spaced apart in the height direction D2 of the group of core sheets 30.

The upper corner 710a is the portion where the front face 710c abuts against the upper face 710d, and the lower corner 710b is the portion where the front face 710c abuts against the lower face 710e. In the illustrated brake block 710, when viewed along a width direction D4 of the brake block 710, the upper and lower corners 710a and 710b form right angles. The width direction D4 is a direction orthogonal to the front-to-back direction D3 and the height direction D2 of the group of core sheets 30. The height direction D2 of the group of core sheets 30 is synonymous with the height direction of the brake block 710.

The side pressure application portion 71 will be described in more detail. The side pressure application portion 71 according to this embodiment further includes a base block 711, a pair of support arms 712, a pivot shaft 713, a biasing means 714, and a driving means 715.

The base block 711 is positioned behind the brake block 710 in the front-to-back direction D3 of the brake block 710. In other words, the brake block 710 is positioned between the side surface of the group of core sheets 30 and the base block 711.

A pair of support arms 712 are spaced apart from each other in the width direction D4 and extend forward from the base block 711 (see Fig. 3). The pair of support arms 712 may extend parallel to each other. The brake block 710 is positioned between the pair of support arms 712 in front of the base block 711.

The pivot shaft 713 is mounted at the tips of the pair of support arms 712 so as to extend in the width direction D4. The brake block 710 is pivotally supported by the pivot shaft 713. As particularly shown in Fig. 4, the brake block 710 has a through hole 710f through which the pivot shaft 713 passes. The through hole 710f may be an elongated hole extending in the front-to-back direction D3 to allow relative displacement of the brake block 710 in the front-to-back direction D3 with respect to the base block 711.

The biasing means 714 is configured, for example, by a coil spring, and is arranged between the base block 711 and the brake block 710 to bias the brake block 710 in the front-to-back direction D3. The biasing of the brake block 710 by the biasing means 714 applies a side pressure to the group of core sheets 30. Additionally or alternatively, the entire side pressure application portion 71 may be driven in the front-to-back direction D3 by a drive means (not shown), thereby applying the side pressure to the group of core sheets 30. The drive means may bias the base block 711. When the side pressure application portion 71 is driven by the drive means, the biasing means 714 may be omitted.

The through hole 710f in the brake block 710 is positioned forward of the center of the brake block 710 in the front-to-back direction D3. As shown in Fig. 4, when the drive means 715 pushes up the rear portion of the brake block 710, the upper corner 710a of the brake block 710 bites into spaces between the core sheets 3, thereby separating the laminated core 4 from the group of core sheets 30. Alternatively, by configuring the drive means 715 to push down the rear portion of the brake block 710, the lower corner 710b can be caused to bite into spaces between the core sheets 3. As the drive means 715, any configuration, such as a hydraulic plunger, a solenoid plunger, or a stepping motor, may be used.

The through hole 710f is positioned above the center position of the brake block 710 in the height direction D2 of the group of core sheets 30. That is, the brake block 710 according to this embodiment is pivotally supported by the pivot shaft 713 positioned above the center position of the brake block 710 in the height direction D2 of the group of core sheets 30. By positioning the pivot shaft 713 above the center position, the force with which the upper corner 710a bites into spaces between the core sheets 3 can be increased by the principle of leverage.

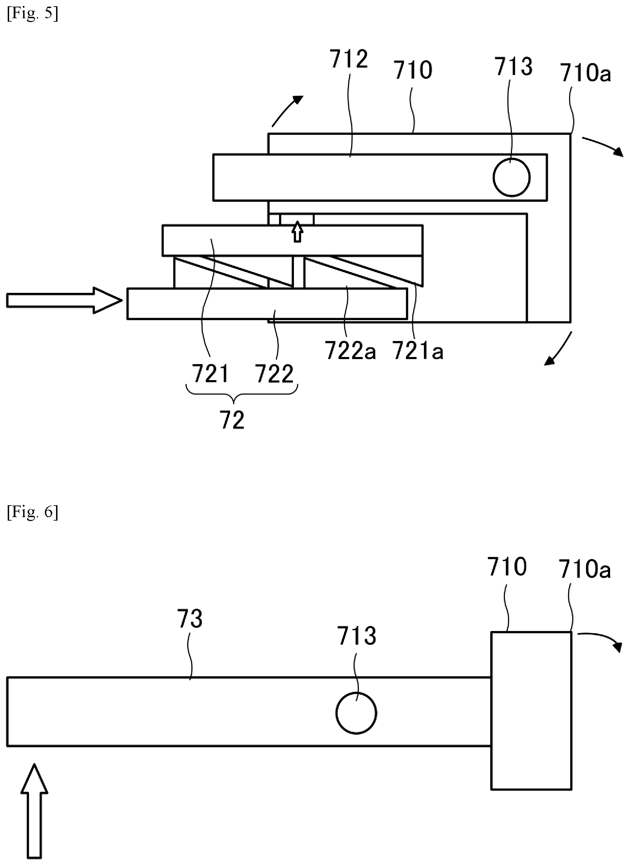

Next, Fig. 5 is an explanatory view showing a first variation of the side pressure application portion 71 of Fig. 4, and Fig. 6 is an explanatory view showing a second variation of the side pressure application portion 71 of Fig. 4. The embodiment of Fig. 4 has been described such that the upper corner 710a is caused to bite into spaces between the core sheets 3 by pushing up the rear portion of the brake block 710. However, the manner in which the brake block 710 is tilted may be arbitrarily changed.

The first variation shown in Fig. 5 is an example of a slide cam type in which the brake block 710 is tilted by a slide cam 72. The slide cam 72 includes a first slide cam 721 and a second slide cam 722, which have a plurality of cams 721a, 722a. The first slide cam 721 is positioned at the lower rear portion of the brake block 710 and is fixed to the brake block 710. The second slide cam 722 is positioned such that the cam 722a meshes with the cam 721a of the first slide cam 721. When the second slide cam 722 is displaced to the right in the figure, the cam 721a of the first slide cam 721 rides over the cam 722a of the second slide cam 722. As a result, the rear portion of the brake block 710 is pushed upward, and the brake block 710 is tilted about the pivot shaft 713, allowing the upper corner 710a of the brake block 710 to bite into spaces between the core sheets 3.

The second variation shown in Fig. 6 is a seesaw-type example in which the brake block 710 is tilted about the pivot shaft 713 positioned rearward of the brake block 710. The pivot shaft 713 is provided on an arm 73 extending rearward from the brake block 710. By pushing up the rear portion of the arm 73 (the portion farther from the brake block 710 than the pivot shaft 713), the upper corner 710a can be caused to bite into spaces between the core sheets 3.

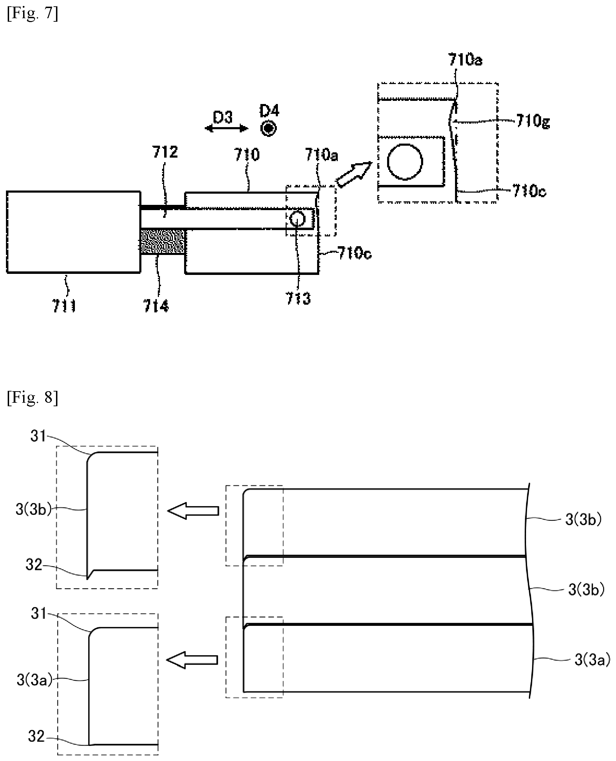

Next, Fig. 7 is an explanatory view showing a third variation of the side pressure application portion 71 of Fig. 4. The upper corner 710a that is caused to bite into spaces between the core sheets 3 may form an acute angle when viewed along the width direction D4 of the brake block 710. As shown in Fig. 7, the upper corner 710a can be made acute by providing a recess 710g at the upper portion of the front face 710c. The recess 710g is provided adjacent to the upper end of the front face 710c. The extending width of the recess 710g in the height direction D2 is preferably 50% or less, more preferably 25% or less, and even more preferably 10% or less of the extending width of the front face 710c in the height direction D2. In a embodiment where the lower corner 710b is caused to bite into spaces between the core sheets 3, the lower corner 710b may be made acute-angled.

Next, Fig. 8 is a cross-sectional view of the core sheet 3 shown in Fig. 2. As described above, the core sheet 3 is punched out from the steel sheet 2. At the ends of the core sheet 3, a rollover 31 is formed on the upper face side, and a burr 32 is formed on the lower face side. The rollover 31 is a portion where the surface of the steel sheet 2 deforms due to tensile force acting on the surface of the steel sheet 2 when the cutting edge of the upper die 13a is pressed into the surface of the steel sheet 2. The burr 32 is a portion of the steel sheet 2 that is stretched or torn off as the cutting edge of the upper die 13a is withdrawn from the steel sheet 2. The burr 32 is also referred to as a fin.

When the core sheets 3 are laminated, the burr 32 of the upper core sheet 3 may cover the rollover 31 of the lower core sheet 3, causing the gap between the upper and lower core sheets 3 to become smaller.

The punching portion 5 may modify the end shape of the core sheet 3 at the position where the laminated core 4 is separated from the group of core sheets 30. More specifically, the punching portion 5 makes the height of the burr 32 of the core sheet 3 at the position where the laminated core 4 is separated from the group of core sheets 30 lower than the height of the burr 32 of the other core sheets 3. In other words, the core sheets 3 include a lower sheet 3a (see Fig. 8), which forms the lower face of the group of core sheets 30 after the laminated core 4 has been separated from the group of core sheets 30, and a laminated sheet 3b (see Fig. 8), which is laminated on top of the lower sheet 3a; the punching portion 5 may be configured to punch the lower sheet 3a such that the height of the burr 32 formed at the lower portion of the lower sheet 3a is lower than the height of the burr 32 formed at the lower portion of the laminated sheet 3b. The height of the burr 32 can be adjusted by changing the clearance between the cutting edge of the upper die 13a and the cutting edge of the lower die 13b. When punching the core sheet 3 (lower sheet 3a) at the position where the laminated core 4 is separated from the group of core sheets 30, the upper die 13a and/or the lower die 13b may be made adjustable so as to reduce the clearance between the cutting edge of the upper die 13a and the cutting edge of the lower die 13b.

For example, in the portion where the brake block 710 in Fig. 3 makes contact (in Fig. 3 (a), the central portions of the upper, lower, left, and right four first side surfaces 30a (edge portions) of the outer periphery of the group of core sheets 30, and in Fig. 3 (b), the second side surfaces 30b (edge portions) at the four corners of the outer periphery of the group of core sheets 30), the upper die 13a and/or the lower die 13b may be made adjustable. In other words, the die cutting edges may be composed of a plurality of components, and the clearance of at least some of these components may be made adjustable. As shown in Fig. 3, when viewing the core sheet 3 in plan view, generally, the die for punching out the outer periphery of the core sheet 3 can be composed of a total of eight components: the edge portions making up the upper, lower, left, and right four first side surfaces 30a and the edge portions making up the four second side surfaces 30b. As described above, when reducing the burr 32 at the central portions of the upper, lower, left, and right four edge portions, each of the components for cutting these four edge portions can be further subdivided into three small components (a total of 12 small components). Each of the three small components can perform the cutting of the central portion and both end portions of the upper, lower, left, and right edge portions. The small components for cutting the central portions of each edge portion may be made adjustable. As shown in Fig. 3 (b), when the brake block 710 is pressed against the second side surfaces 30b at the four corners, the components for cutting the edge portions making up the second side surfaces 30b at the four corners may be made adjustable.

Alternatively, the punching portion 5 may punch out the core sheet 3 so that the height of the burr 32 at the portion against which the brake block 710 is pressed is smaller than the height of the burr 32 at the adjacent position, without making the clearance adjustable. To illustrate it using the above example, among the three small components, the clearance of the small component for cutting the central portion of the edge portion making up the first side surface 30a may be set smaller than the clearance of the small components for cutting both end portions of that edge portion. As shown in Fig. 3 (b), when the brake block 710 is pressed against the second side surfaces 30b at the four corners, the clearance of the components for cutting the edge portions making up the second side surfaces 30b at the four corners may be set smaller than the clearance of the components for cutting the upper, lower, left, and right edge portions.

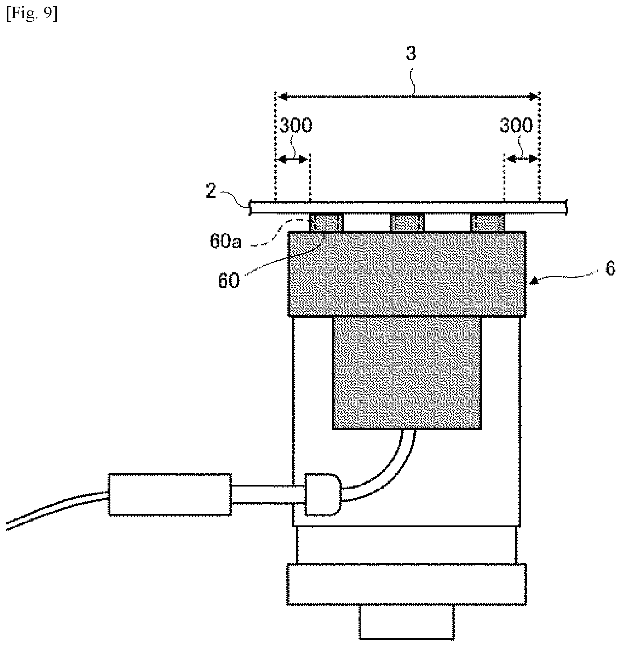

Next, Fig. 9 is an enlarged view showing the adhesive application portion 6 of Fig. 1. As shown in Fig. 9, the adhesive application portion 6 has is provided with a passage 60a through which an adhesive passes and has a discharge portion 60 configured to discharge the adhesive from the tip of the passage 60a. In the illustrated embodiment, the discharge portion 60 is composed of a plurality of nozzles arranged at a distance from one another. The adhesive application portion 6 is disposed such that the adhesive discharged from the tip of the discharge portion 60 is brought into contact with the steel sheet 2 in response to the up-and-down movement of the steel sheet 2 accompanying the punching of the core sheet 3 from the steel sheet 2.

In this embodiment, the adhesive is applied to the surface of the steel sheet 2 (the lower surface shown in the figure). The outer peripheral portion of the surface of the portions corresponding to the core sheets 3 is provided with a non-coated region 300 where no adhesive is applied. When the group of core sheets 30 is formed in the laminating portion 7, the non-coated region 300 forms a gap between the core sheets 3 adjacent to each other within the group of core sheets 30. The separation portion 8 (side pressure application portion 71) can bite into spaces between the core sheets 3 through the gap formed by the non-coated region 300. The non-coated region 300 may be provided at least at the position of the separation portion 8 in the circumferential direction of the portion corresponding to the core sheets 3. The non-coated region 300 may also be provided at the outer peripheral portion of the portion corresponding to the core sheets 3 over the entire circumference thereof.

### Embodiment 2.

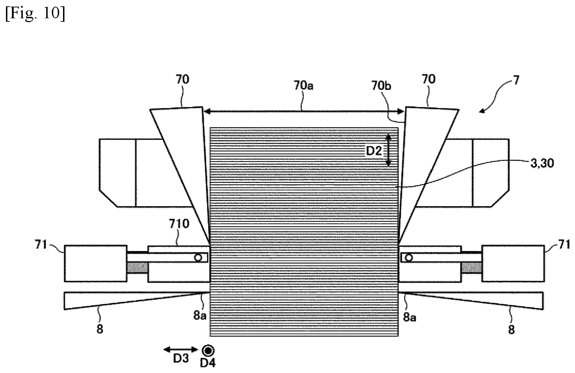

Fig. 10 is an explanatory view showing the laminating portion 7 of the manufacturing device 1 for a laminated core according to Embodiment 2 of the present invention. While it was described in Embodiment 1 that the side pressure application portion 71 also serves as the separation portion 8, the separation portion 8 may be provided separately from the side pressure application portion 71. In the embodiment shown in Fig. 10, the separation portion 8 is composed of a plurality of wedge-shaped members arranged at a distance from one another in the circumferential direction of the group of core sheets 30, located below the side pressure application portion 71. The separation portion 8 is configured to move forward and backward in the direction of approaching and moving away from the side surfaces of the group of core sheets 30. By bringing the separation portion 8 closer to the side surfaces of the group of core sheets 30, the tip 8a of the separation portion 8 may bite into spaces between the core sheets 3 adjacent to each other within the group of core sheets 30, thereby separating the laminated core 4 from the group of core sheets 30. The position of the members making up the separation portion 8 may be at other positions, such as above the side pressure application portion 71. Other configurations are the same as those of Embodiment 1.

The manufacturing method for a laminated core according to an embodiment of the present invention includes manufacturing the laminated core 4 using the manufacturing device 1 for a laminated core 4 described above. The manufacturing method for a laminated core may include: a step of punching the core sheets 3 from the steel sheet 2 using the punching portion 5; a step of applying an adhesive to the portions of the steel sheet 2 corresponding to the core sheets 3 using the adhesive application portion 6; a step of laminating and bonding the core sheets 3 to which the adhesive has been applied at the laminating portion 7 to form the group of core sheets 30; and a step of causing the separation portion 8 to bite into spaces between the core sheets 3 adjacent to each other within the group of core sheets 30 to separate the laminated core 4 having a predetermined number of core sheets 3 laminated and bonded, from the group of core sheets 30.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

The inventions disclosed in this specification can also be described as follows.
[1] A manufacturing device for a laminated core in which core sheets having a predetermined shape are formed by punching from a steel sheet and a predetermined number of core sheets are laminated and bonded, the manufacturing device comprises:
   a punching portion that punches out core sheets from a steel sheet;
   an adhesive application portion that applies an adhesive to portions of the steel sheet corresponding to the core sheets;
   a laminating portion that laminates and bonds the core sheets to which adhesive has been applied to form a group of core sheets; and
   a separation portion that bites into spaces between core sheets adjacent to each other within the group of core sheets to separate the laminated core from the group of core sheets,
   wherein the laminating portion comprises a plurality of pairs of side pressure application portions that apply a side pressure to the group of core sheets, each pair of side pressure application portions is disposed to face each other with the group of core sheets sandwiched therebetween, and
   at least one of the side pressure application portions is configured to serve as the separation portion.
[2] The manufacturing device for a laminated core according to [1], wherein each of the plurality of pairs of side pressure application portions comprises a brake block that is pressed against the side surface of the group of core sheets, and
   wherein the brake block is configured to be tilted when separating the laminated core from the group of core sheets, such that an upper or lower corner in a height direction of the group of core sheets bites into spaces between the core sheets.
[3] The manufacturing device for a laminated core according to [2], wherein the brake block is configured such that the upper corner bites into spaces between the core sheets, and the lower corner is tilted away from the group of core sheets.
[4] The manufacturing device for a laminated core according to [3], wherein the brake block is pivotally supported by a pivot shaft positioned above a central position of the brake block in the height direction of the group of core sheets.
[5] The manufacturing device for a laminated core according to any one of [1] to [4], wherein the punching portion modifies the end shape of the core sheet at a position where the laminated core is separated from the group of core sheets.
[6] The manufacturing device for laminated core according to any one of [1] to [5], wherein the adhesive is applied to a surface of the steel sheet, and a non-coated region where the adhesive is not applied is provided at an outer peripheral portion of the surface of the portions of the steel sheet corresponding to the core sheets, and when the group of core sheets is formed in the laminating portion, the non-coated region forms a gap between the core sheets adjacent to each other within the group of core sheets, and the separation portion bites into spaces between the core sheets through the gap formed by the non-coated region.
[7] A manufacturing method for a laminated core, the method comprising manufacturing the laminated core using the manufacturing device according to any one of [1] to [6].

### [Description of Reference Numerals]

1: manufacturing device
2: steel sheet
3: core sheet
4: laminated core
5: punching portion
6: adhesive application portion
7: laminating portion
8: separation portion
30: group of core sheets
71: side pressure application portion
710: brake block
710a: upper corner
710b: lower corner
713: pivot shaft

## Claims

1. A manufacturing device for a laminated core in which core sheets having a predetermined shape are formed by punching from a steel sheet and a predetermined number of core sheets are laminated and bonded, the manufacturing device comprises:
a punching portion that punches out the core sheets from the steel sheet;
an adhesive application portion that applies an adhesive to portions of the steel sheet corresponding to the core sheets;
a laminating portion that laminates and bonds the core sheets to which adhesive has been applied to form a group of core sheets; and
a separation portion that bites into spaces between core sheets adjacent to each other within the group of core sheets to separate the laminated core from the group of core sheets,
wherein the laminating portion comprises a plurality of pairs of side pressure application portions that apply a side pressure to the group of core sheets, each pair of side pressure application portions is disposed to face each other with the group of core sheets sandwiched therebetween, and
at least one of the side pressure application portions is configured to serve as the separation portion.

2. The manufacturing device for a laminated core according to claim 1, wherein each of the plurality of pairs of side pressure application portions comprises a brake block that is pressed against the side surface of the group of core sheets, and
wherein the brake block is configured to be tilted when separating the laminated core from the group of core sheets, such that an upper or lower corner in a height direction of the group of core sheets bites into spaces between the core sheets.

3. The manufacturing device for a laminated core according to claim 2, wherein the brake block is configured such that the upper corner bites into spaces between the core sheets, and the lower corner is tilted away from the group of core sheets.

4. The manufacturing device for a laminated core according to claim 3, wherein the brake block is pivotally supported by a pivot shaft positioned above a central position of the brake block in the height direction of the group of core sheets.

5. The manufacturing device for a laminated core according to any one of claims 1 to 4, wherein the punching portion modifies the end shape of the core sheet at a position where the laminated core is separated from the group of core sheets.

6. The manufacturing device for a laminated core according to any one of claims 1 to 4, wherein the adhesive is applied to a surface of the steel sheet, and a non-coated region where the adhesive is not applied is provided at an outer peripheral portion of the surface of the portions of the steel sheet corresponding to the core sheets, and when the group of core sheets is formed in the laminating portion, the non-coated region forms a gap between the core sheets adjacent to each other within the group of core sheets, and the separation portion bites into spaces between the core sheets through the gap formed by the non-coated region.

7. A manufacturing method for a laminated core, the method comprising manufacturing the laminated core using the manufacturing device according to any one of claims 1 to 4.
